# EUROPEAN PATENT APPLICATION

(11) **EP 3 125 524 A1**
(43) Date of publication of application: **01.02.2017**
(21) Application number: 16000771.2
(22) Date of filing: 04.04.2016
(51) Int. Cl.: H04N 5/225, G06T 5/50, H04N 5/232

(54) **MOBILE TERMINAL AND METHOD FOR CONTROLLING THE SAME**

(30) Priority: 28.07.2015 KR 20150106792
(71) Applicant: LG Electronics Inc., Seoul 07336 (KR)
(72) Inventor: EUM, Hyomin, 06772 Seoul (KR); KIM, Seongeun, 06772 Seoul (KR); KANG, Yonjae, 06772 Seoul (KR); SHIN, Chorok, 06772 Seoul (KR); NOH, Eunyoung, 06772 Seoul (KR)
(74) Representative: Beyer, Andreas

(57) **Abstract**

There are provided a mobile terminal providing an image capture function and a method for controlling the same. The mobile terminal includes a first camera configured to capture an image at a first angle of view, a second camera configured to capture an image at a second angle of view different from the first angle of view, and a controller configured to capture a first image received from the first camera and a second image received from the second camera, wherein the controller may process the first and second images by associating the first and second images.

## Description

### BACKGROUND OF THE INVENTION

### 1. Field of the Invention

The present disclosure relates to a mobile terminal providing an image capture function and a method for controlling the same.

### 2. Background of the Invention

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. More recently, mobile terminals have been configured to receive broadcast and multicast signals which permit viewing of content such as videos and television programs.

As functions of the terminal become more diversified, the terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.

Efforts are ongoing to support and increase the functionality of mobile terminals. Such efforts include software and hardware improvements, as well as changes and improvements in the structural components.

Recently, user demand for capturing images through mobile terminals equipped with a camera has increased. Structural parts and/or software parts related to cameras have been variously developed. As part of such development, mobile terminals equipped with two or more cameras having different angles of view have been developed. Thus, necessity to develop various methods for capturing images using two or more cameras has emerged.

### SUMMARY OF THE INVENTION

Therefore, an aspect of the detailed description is to provide a method for capturing an image using two or more cameras having different angles of view.

To achieve these and other advantages and in accordance with the purpose of this specification, as embodied and broadly described herein, a mobile terminal configured to capture an image may include: a first camera configured to capture an image at a first angle of view; a second camera configured to capture an image at a second angle of view different from the first angle of view; and a control unit configured to capture a first image received from the first camera and a second image received from the second camera, wherein the control unit may process the first and second images by associating the first and second images.

In an embodiment, the control unit may detect a partial image corresponding to the first image from the second image, and replace the detected partial image with the first image to generate a synthesized synthetic image.

In an embodiment, the first camera and the second camera may have the same image capture direction, and the control unit may capture images simultaneously in the same image capture direction through the first camera and the second camera.

In an embodiment, the control unit may generate at least one of the simultaneously captured images, as a moving image.

In an embodiment, the control unit may sequentially capture the images received through the first camera and the second camera.

In an embodiment, the mobile terminal may further include: a display unit configured to display a preview image of the first image received from the first camera and a preview image of the second image received from the second camera, wherein the control unit may detect a preview image corresponding to the firs image from the preview image of the second image, and display the preview image of the first image corresponding to the detected preview image on the second image in an overlapping manner.

In an embodiment, the control unit may display a graphic object visually distinguishing between the first image and the second image in a boundary region of the preview image of the first image and the preview image of the second image.

In an embodiment, when a preset type of touch is applied to the display unit, the control unit may control the first camera or the second camera such that the preview image of the first image or the preview image of the second image is zoomed in or zoomed out.

In an embodiment, the control unit may control the first camera or the second camera such that the first image and the second image have different visual effects.

In an embodiment, when an image capture request for capturing an image is received from a user, the control unit may simultaneously capture the first image and the second image displayed on the display unit, and synthesize the first image and the second image such that the first image overlaps the second image to generate a synthetic image.

In an embodiment, the mobile terminal may further include: a display unit configured to include a first region displaying a preview image of the first image received from the camera and a second region displaying a preview image of the second region received from the second camera, wherein when a touch is applied to any one of the first region and the second region, the control unit may capture the preview image displayed in the any one region, as video.

In an embodiment, while the first image displayed in the first region is being captured as video on the basis of the touch applied to the first region, when a touch applied to the second region is sensed, the control unit may capture the second image displayed in the second region, as video.

In an embodiment, when a touch applied to the second region is sensed, the control unit may stop capturing the video of the first image.

In an embodiment, the control unit may synthesize the first image captured as video and the second image captured as video to generate a synthetic image.

In an embodiment, the first camera and the second camera have the same image capture direction, and the mobile terminal may further include a third camera having an image capture direction different from those of the first camera and the second camera, wherein the control unit may capture still images through the first camera and the second camera, and capture video through the third camera.

To achieve these and other advantages and in accordance with the purpose of this specification, as embodied and broadly described herein, a method for controlling a mobile terminal having a plurality of cameras provided to capture images at different angles of view, includes: capturing a first image by a first camera configured to capture an image at a first angle of view; capturing a second image by a camera configured to capture an image at a second angle of view different from the first angle of view; and processing the first image and the second image by associating the first image and the second image.

In an embodiment, in the processing of the first image and the second image by associating the first image and the second image, a synthetic image may be generated by synthesizing the first image and the second image.

In an embodiment, the synthetic image may be a synthetic image generated by replacing a partial image of the second image, which the same as the first image, with the first image.

In an embodiment, the method may further include: displaying the first image and the second image on the display unit, wherein when a preset type of touch is applied to a region in which the first image or the second image is displayed, the first image or the second image may be zoomed in or zoomed out.

In an embodiment, the first image may be displayed on a partial image corresponding to the same image in the second image as the first image in an overlapping manner.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1A is a block diagram of a mobile terminal in accordance with the present disclosure.
FIGS. 1B and 1C are conceptual views of one example of a mobile terminal, viewed from different directions.
FIG. 1D is a view illustrating a front side of a mobile terminal related to the present disclosure.
FIG. 2 is a flow chart illustrating a method for processing images captured through at least two cameras having different angles of view.
FIGS. 3A, 3B, 3C, and 4 are conceptual views illustrating a control method of FIG. 2.
FIGS. 5A and 5B are conceptual views illustrating a method for synthesizing a first image and a second image on the basis of a user setting.
FIGS. 6, 7A, and 7B are conceptual views illustrating a method for sequentially capturing images through a first camera and a second camera and synthesizing the captured images.
FIGS. 8A, 8B, 9A, and 9B are conceptual views illustrating a method for capturing images through a first camera and a second camera having different angles of view and synthesizing the images to generate a synthesized image.
FIGS. 10A and 10B are conceptual views illustrating a method for capturing video with images received through a plurality of cameras.
FIGS. 11A, 11B, and 11C are conceptual views illustrating a method for capturing video and a still image through a plurality of cameras.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

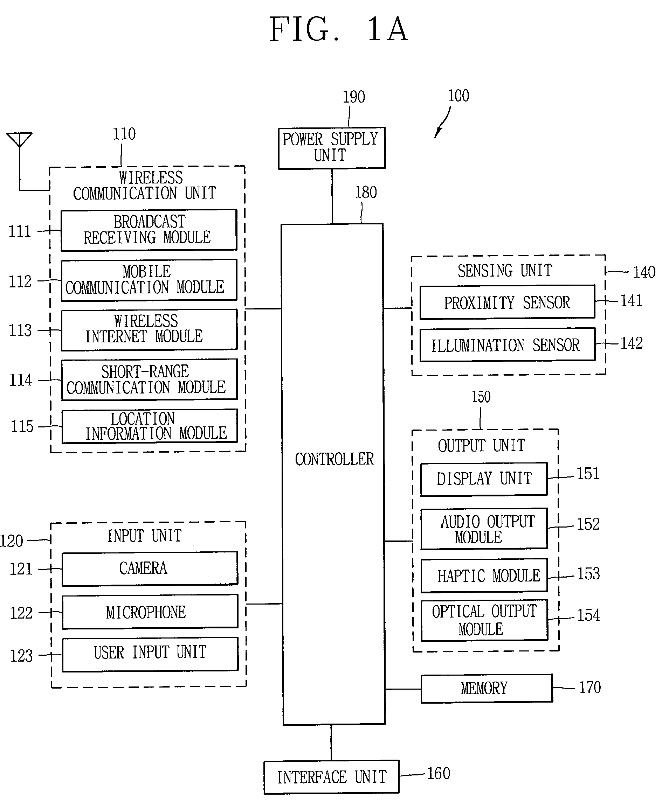

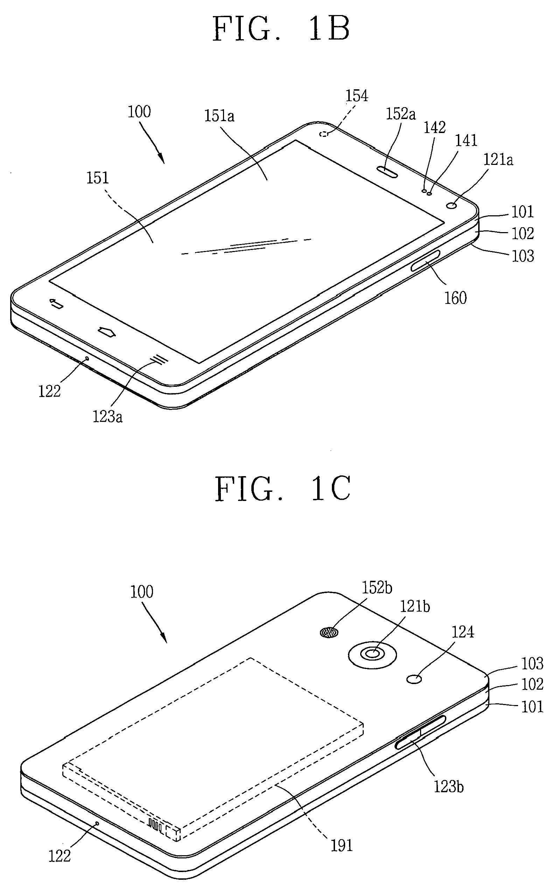

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs.

The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

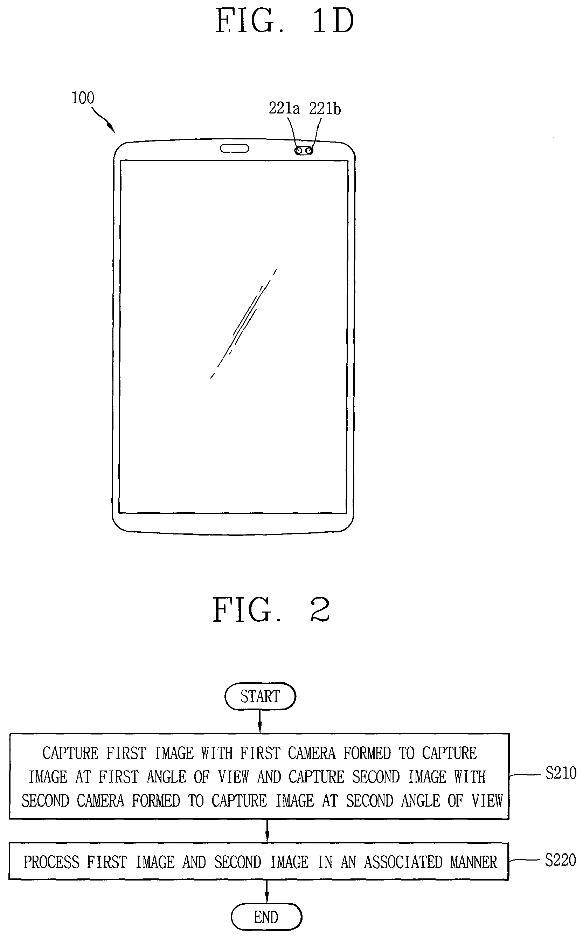

Meanwhile, FIG. 1D is a view illustrating a front side of the mobile terminal according to an exemplary embodiment. The mobile terminal according to an embodiment of the present disclosure may include at least two cameras provided to capture images at different angles of view. The angle of view is an image capture range of a lens installed in the cameras. Here, as an angle of view is greater, an image of a larger range may be captured.

As the angle of view of the lens of the camera is greater, a focal length may be shortened. Thus, in a case in which an image is captured with a camera having a lens with a larger angle of view, an image of a large range may be captured. Here, however, due to the larger angle of view, the captured image of a large range may be distorted as much and perspective thereof may be exaggerated.

The lens may be classified as a wide angle lens, a normal lens, and a telephoto lens depending on the angles of view. The normal lens has an angle of view of 45 degrees and a focal length of 50 mm. With respect to the normal lens, a lens having an angle of view greater than 45 degrees may be classified as a wide angle lens, and a lens having an angle of view smaller than 45 degrees may be classified as a telephoto lens.

The mobile terminal may include at least two cameras provided on at least one of a front surface, a side surface, and a rear surface of the main body thereof in order to capture images at different angles of view. For example, as illustrated in FIG. 1D, two cameras 221a and 221b having different angles of view may be disposed to be adjacent to each other on the front surface of the main body. In this case, the two cameras 221a and 221b having different angles of view may have the same image capturing direction.

In an embodiment of the present disclosure, two cameras having different angles of view may be disposed on the rear surface or one side surface of the main body of the mobile terminal, as well as on the front surface thereof. Also, at least two cameras may be disposed mutually different surfaces among the front surface, the side surface, and the rear surface such that the two cameras may have different image capturing directions.

Hereinafter, a method or receiving images from two cameras having different angles of view will be described representatively, but the present disclosure may also be applied in the same manner to three or more cameras. Also, in the present disclosure, an example in which two cameras are provided is described, and the present disclosure may also be applied in the same manner even to a case in which a single camera having two lenses having different angles of view is provided.

Meanwhile, in the following descriptions, the first camera 221a is provided to capture an image at a first angle of view and a second camera 221b is provided to capture an image at a second angle of view, and common contents of the first camera 221a and the second camera 221b will be described with a term of camera 221.

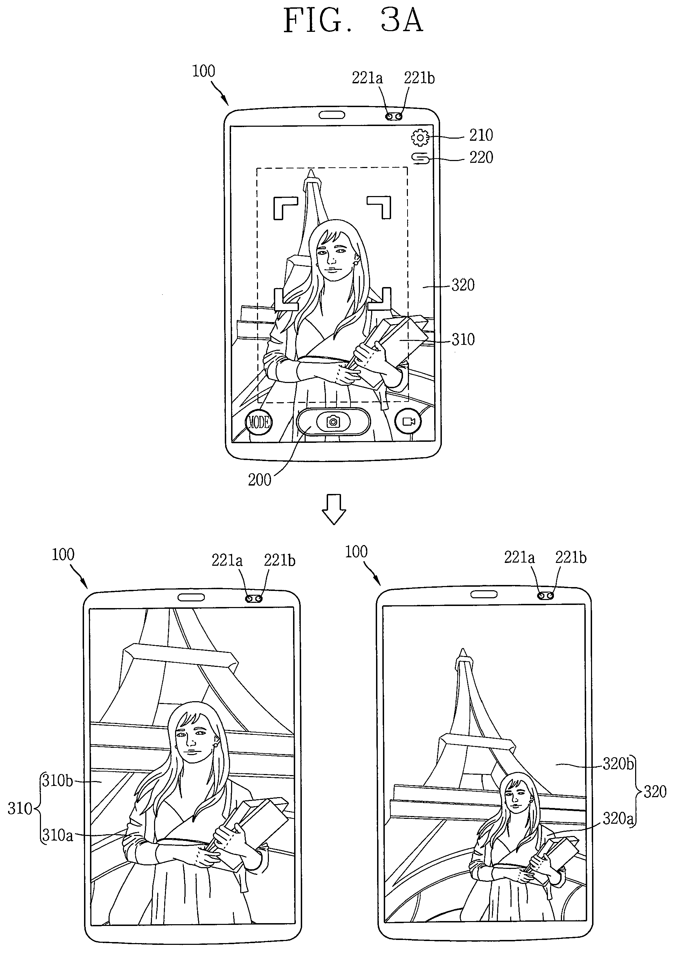

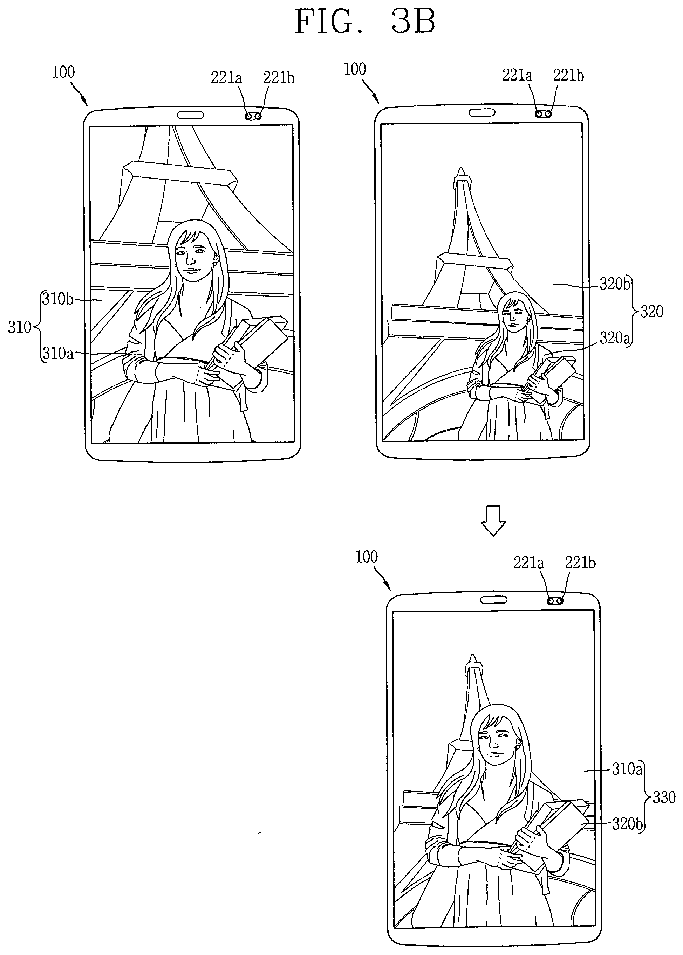

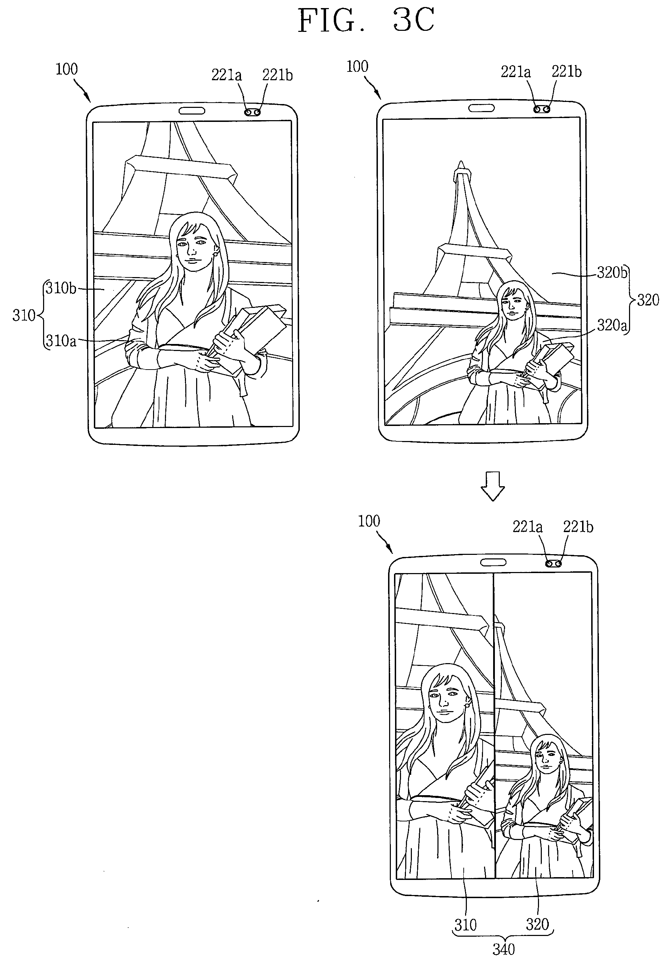

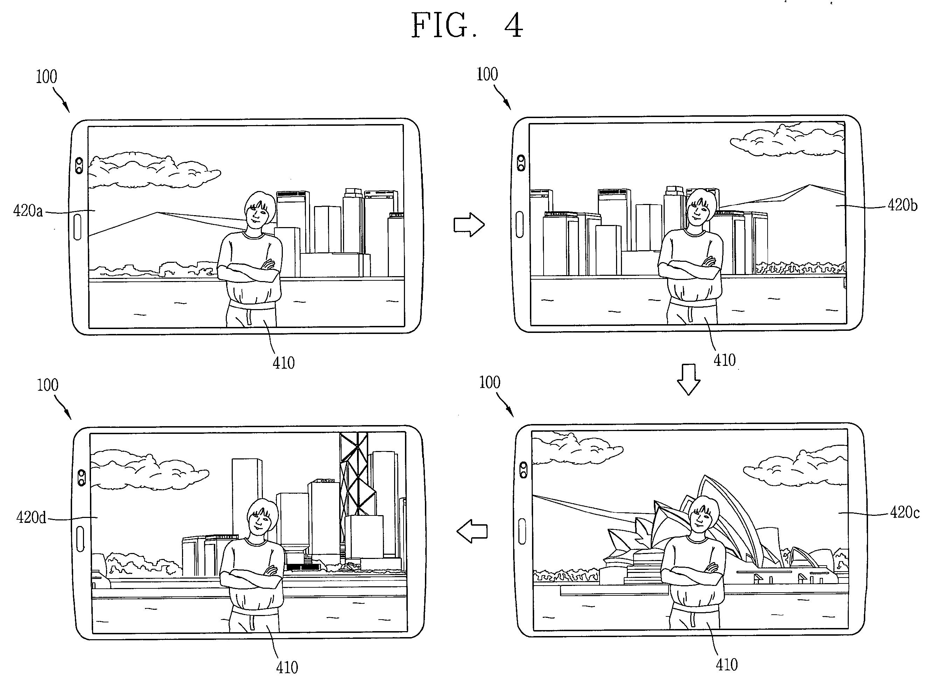

Hereinafter, a method for capturing an image through at least two cameras having different angles of view will be described. FIG. 2 is a flow chart illustrating a method for processing images captured through at least two cameras having different angles of view, and FIGS. 3A, 3B, 3C, and 4 are conceptual views illustrating a control method of FIG. 2.

In the mobile terminal according to an embodiment of the present disclosure, at least two cameras 221a and 221b may be disposed on at least one of the front surface, the side surface, and the rear surface of the terminal body. For example, in the mobile terminal, two cameras 221a and 221b may be disposed to be adjacent to each other on the front surface.

The at least two cameras 221a and 221b may include the first camera 221a and the second camera 221b having different angles of view. For example, the first camera 221a may be provided to capture an image at a first angle of view, and the second camera 221b may be provided to capture an image at a second angle of view greater than the first angle of view. The first camera 221a may be understood as a general camera including a normal lens, and the second camera 221b may be understood as a wide angle camera including a wide angle lens.

The control unit 180 of the mobile terminal may receive an image through at least one of the first camera 221a and the second camera 221b. For example, the control unit 180 may receive an image through the first camera 221a among the first camera 221a and the second camera 221b.

In order to receive an image through the camera, the control unit 180 may activate the camera. Activating the camera 121 may refer to setting the camera 121 to a state in which an image of a subject is received through the camera 121.

Conversely, deactivating the camera 121 may refer to setting the camera 121 to a state in which an image of a subject is not received through the camera 121.

The control unit 180 may activate at least one of the first and second cameras 221a and 221b to receive an image from the first and second cameras 221a and 221b.

The control unit 180 may select a camera for receiving an image from among the first and second cameras 221a and 221b according to a user request. For example, the control unit 180 may receive an image from the first camera 221a when a user request for receiving an image from the first camera 221a is received.

Also, the control unit 180 may display the image received from the at least one camera on the display unit 151. For example, the control unit 180 may display a first image received from the first camera 221a on the display unit 151.

Also, the control unit 180 may capture an image received from at least one of the first and second cameras 221a and 221b. For example, the control unit 180 may capture only a first image received from the first camera 221a and a second image received from the second camera 221b. Also, the control unit 180 may capture both images received from the first and second cameras 221a and 221b.

Hereinafter, a method for processing different images received from the first and second cameras 221a and 221b in a case in which images received from the first and second cameras 221a and 221b are captured together will be described. However, the present disclosure may also be applied in the same manner to other images separately captured by the first and second cameras 221a and 221b.

First, the control unit of the mobile terminal according to an embodiment of the present disclosure may perform capturing a first image and a second image through the first camera formed to capture an image at a first angle of view and the second camera formed to capture an image at a second angle of view (S210).

The control unit 180 may capture the first image received from the first camera 221a and the second image received from the second camera 221b according to a user request. For example, when the first and second cameras 221a and 221b are activated, the control unit 180 may display preview images of the first image and the second image received from the first and second cameras 221a and 221b on the display unit 151. The preview images are images received from the cameras before the first and second images are captured.

Along with the preview images of the first and second images, a graphic object 200 formed to receive an image capture request, a graphic object 210 for controlling a camera setting value, and a graphic object 220 for camera switching may be further displayed on the display unit 151.

The graphic object 200 formed to receive the image capture request may generate a control command for capturing the image displayed on the display unit 151. That is, when a touch is applied to the graphic object 200 formed to receive the image capture request, the control unit 180 may capture the preview image displayed on the display unit 151. For example, as illustrated in FIG. 3A, when a touch is applied to the graphic object 200 formed to receive the image capture request, the control unit 180 may capture first and second images 310 and 320 together on the preview image.

The first image 310 may be captured at a first angle of view and may include a first partial image 310a including a face image and a second partial image 310b as a remaining portion excluding the first partial image 310a. Similarly, the second image 320 is captured at a second angle of view greater than the first angle of view, and may include a third partial image 320a including a face image and a fourth partial image 320b as a remaining portion excluding the third partial image 320a.

The graphic object 210 for setting the camera setting value may be associated with a function of setting the camera setting value. For example, the function of setting the camera setting value may be an image size setting function, an ISO control function, a face recognition setting function, and the like.

The graphic object 220 for camera switching may be associated with a function of controlling, while an image received through any one camera among the first camera 221a and the second camera 221b is being displayed on the display unit 151, the other camera such that an image received through the other camera different from the any one camera is displayed on the display unit 151.

Alternatively, the graphic object 220 for camera switching may be associated with a function of controlling, while an image received through any one camera among the first camera 221a and the second camera 221b is being displayed on the display unit 151, the any one camera and the other camera such that images received from the any one camera and the other camera are displayed together on the display unit 151.

Alternatively, the graphic object 220 for camera switching may be associated with a function of controlling, while images received through both the first camera 221a and the second camera 221b are being displayed on the display unit 151, the first camera 221a and the second camera 221b such that only an image received from any one camera among the first camera 221a and the second camera 221b is displayed.

Meanwhile, in a case in which the first image and the second image are captured together, the control unit 180 may capture the first image and the second image according to the same image capturing scheme or according to different image capturing schemes.

The image capturing scheme is a scheme of capturing an image. For example, the image capturing scheme may include a video capturing scheme for generating video, a still image capturing scheme for generating a still image, a continuous image capturing scheme for capturing images by a preset number of times at a preset time interval, a person image capturing scheme for capturing a person-centered image, a background image capturing scheme for capturing an image based on a background.

In a case in which the image capturing scheme is in plurality, the control unit 180 may set the image capturing scheme according to a user selection. For example, when a still image capturing scheme for capturing a still image is selected by the user, the control unit 180 may set the camera 121 to capture a still image through the camera 121.

In a case in which images are captured simultaneously or sequentially through the first and second cameras 221a and 221b, both the first and second cameras 221a and 221b may capture images according to the same image capturing scheme or the first and second cameras 221a and 221b may capture images according to different schemes.

For example, as illustrated in FIG. 3A, the control unit 180 may capture all of images received from the first and second cameras 221a and 221b according to the still image capturing scheme. In this case, the image received from the first camera 221a and the image received from the second camera 221b may be captured as still images.

In another example, the control unit 180 may capture the image received from the first camera 221a according to the still image capturing scheme and the image received from the second camera 221b according to the continuous image capturing scheme. In this case, the image received from the first camera 221a may be captured as a still image and the image received from the second camera 221b may be captured as a plurality of predetermined number of still images.

In another example, the control unit 180 may capture the image received from the first camera 221a according to the still image capturing scheme and the image received from the second camera 221b according to the video capturing scheme. In this case, the image received from the first camera 221a may be captured as a still image and the image received from the second camera 221b may be captured as video.

That is, in the mobile terminal according to an embodiment of the present disclosure, images may be simultaneously or sequentially captured according to different image capturing schemes.

When the first and second images are captured through the first and second cameras 221a and 221b, the control unit 180 may perform a step of processing the first image and the second image in an associated manner (S220).

When the first image and the second image are captured, the control unit 180 may process the first image and second image by associating them. In detail, the control unit 180 may synthesize the first image and the second image to generate a synthetic image. Also, apart from the one image, the control unit 180 may separately store the first image and the second image in the memory 170.

Hereinafter, a case of generating a synthetic image by synthesizing the first image and the second image will be described, but the first image and the second image may be separately stored in the memory 170.

The control unit 180 may synthesize at least a portion of the first image with at least a portion of the second image to generate a synthetic image.

Here, the control unit 180 may synthesize the images regardless of whether the first image and the second image have been captured according to the same image capturing scheme or according to different image capturing schemes.

The method for synthesizing the images use various schemes. For example, the control unit 180 may synthesize the first image and the second image on the basis of a preset algorithm or according to a user selection.

The preset algorithm may be an image synthesis algorithm. For example, with respect to the first image and the second image captured through the first camera 221a and the second camera 221b which have different angles of view and which capture images in the same image capturing direction, the preset algorithm may be an algorithm detecting images including the same image and synthesizing the detected images by using them.

In order to synthesize the first image and the second image, the control unit 180 may detect at least portion of the first image and the second image. For example, as illustrated in the second drawing of FIG. 3B, the control unit 180 may detect the first partial image 310a including the face image from the first image 310, as an image of at least a portion to be synthesized with the second image 320. In another example, when a touch drawing a closed curve with respect to the first image is applied, the control unit 180 may detect an inner region of the closed curve as at least a portion of an image to be synthesized.

Thereafter, the control unit 180 may synthesize the detected at least portion of the first image to at least portion of the second image. Here, the control unit 180 may synthesize the at least portion of the first image to the second image on the basis of a preset algorithm. The preset algorithm may be an algorithm for detecting an image corresponding to the at least a portion of the first image from the second image, and replacing it with at least a portion of the first image.

For example, as illustrated in the third drawing of FIG. 3B, the control unit 180 may replace the image corresponding to the first image in the fourth partial image 320b of the second image with the first partial image 310a of the first image to generate a synthesized synthetic image 330.

Alternatively, the control unit 180 may synthesize the first image 310 and the second image 320 in the form of a preset frame to generate a synthetic image. The frame may represent a form of synthesizing images. For example, the frame may be a frame for synthesizing images in such a form that the first image 310 is positioned on the left and the second image 320 is positioned on the right with respect to the front surface of the display unit 151, or may be a frame synthesizing images in such a form that the first image 310 is positioned above and the second image 320 is positioned below. For example, as illustrated in FIG. 3C, the control unit 180 may generate the synthetic image 340 having a structure in which the first image 310 is positioned on the left and the second image 320 is positioned on the right with respect to the front surface of the display unit 151.

In another example, in a case in which the first image and the second image are simultaneously captured, the control unit 180 may synthesize the images in such a form that the first image and the second image are displayed in a preview state on the display unit 151 before being simultaneously captured.

In detail, as illustrated in the first drawing of FIG. 4, the control unit 180 may capture an image of a person according to a person image capturing scheme of capturing a person on the basis of face recognition through the first camera 221a, and may capture an image according to the continuous image capturing scheme of capturing images by a preset number of times with a preset time interval. In this case, as illustrated in the first drawing of FIG. 4, a first image 410 may be an image captured on the basis of a person at a first angle of view, and a second image 420a may be an image captured on the basis of a background. That is, in an embodiment of the present disclosure, since the first and second cameras 221a 221b capture images at different angles of view, the first and second cameras 221a and 221b may obtain different images having different angles of view even in the same image capture direction.

Also, on the basis of an image capture request, the control unit 180 may capture a single image through the first camera 221a and capture a plurality of images through the second camera 221b. For example, as illustrated in the second, third, and fourth drawings of FIG. 4, the control unit 180 may capture four continuous images 420a, 420b, 420c, and 420d through the second camera 221b.

When image capturing is terminated, the control unit 180 may synthesize the single first image 410 captured through the first camera 221a and the four images 420a, 420b, 420c, and 420d captured through the second cameras 221b to generate a single synthetic image.

The synthetic image may be a preset time interval, and the four images may be displayed on the display unit 151 such that the four images are sequentially changed.

For example, as illustrated in FIG. 4, the control unit 180 may generate the first image captured by the first camera 221a and the four images captured by the second camera 221b as sub-synthetic images. Thereafter, the control unit 180 may synthesize the images generated as sub-synthetic images to a single synthetic image.

The synthetic image may be generated as a moving image that follows a file standard of graphics interchange format (GIF). In this case, the synthetic image, as an image in the form of moving on the display unit 151, may have an animation effect. For example, as illustrated in the four drawings of FIG. 4, the synthetic image may be an image in which the first image capturing a person is not changed and only the background is automatically changed according to the passage of time.

Thus, the user may create the synthetic image in which the person and the background are appropriately harmonized through the first camera 221a and the second camera 221b formed to have the same image capture direction and formed to capture images at different angles of view.

In the above, the method for synthesizing images captured by the first camera and the second camera has been described. In this manner, in an embodiment of the present disclosure, the different images having different angles of view may be synthesized in various manners to generate a synthetic image.

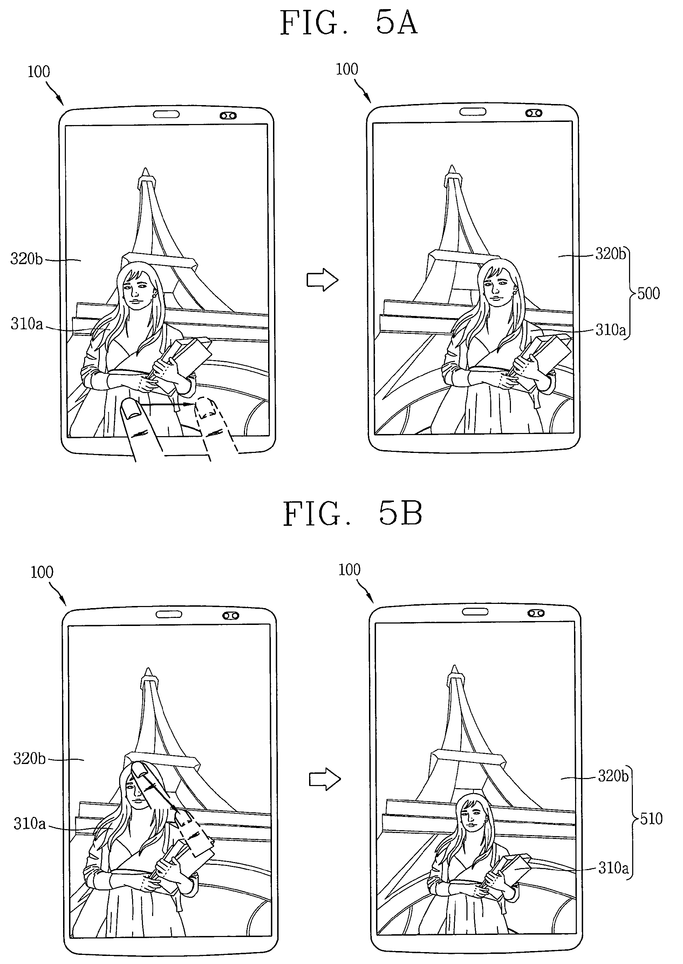

Hereinafter, a method for synthesizing a first image and a second image on the basis of a user setting will be described. FIGS. 5A and 5B are conceptual views illustrating a method for synthesizing a first image and a second image on the basis of a user setting.

The mobile terminal according to an embodiment of the present disclosure may capture a first image and a second image having different angles of view in the same image capture direction by using the first camera 221a and the second camera 221b formed to capture images at different angles of view.

The control unit 180 may synthesize the captured first image and the captured second image to generate a single synthetic image. In a case in which the first image and the second image are synthesized, the control unit 180 may set a position in which the first image is to be synthesized in the second image or a size of the first image to be synthesized on the basis of a control command of the user.

In detail, in order to determine a position of the second image in which at least a portion of the first image is to be synthesized, the control unit 180 may sense a preset type of touch applied to at least portion of the first image. For example, as illustrated in the first drawing of FIG. 5A, in a state in which the fourth partial image 320b of the second image is displayed on the display unit 151, the control unit 180 may sense a drag touch applied to the first partial image 310a of the first image.

In this case, on the basis of the preset type of touch, the control unit 180 may determine a position in the fourth partial image 320b of the second image in which the first partial image 310a of the first image is to be synthesized. For example, as illustrated in the second drawing of FIG. 5A, the control unit 180 may determine a region in which the sensing of the drag touch is terminated in the region in which the four partial image 320b of the second image is displayed, as a position in which the first partial image 310a of the first image is to be synthesized.

Thereafter, the control unit 180 may synthesize the at least portion 310a of the first image and the fourth partial image 320b of the second image in the determined position to generate a synthetic image 500.

Also, in order to synthesize the first image and the second image, the control unit 180 may set a size of the first image to be synthesized with the second image on the basis of a user request. For example, as illustrated in the first drawing of FIG. 5B, the control unit 180 may sense a touch applied to a boundary region of the first partial image 310a in the first image. On the basis of the touch applied to the first partial image 310a, the control unit 180 may change an output size of the first partial image 310a. For example, as illustrated in the second drawing of FIG. 5B, on the basis of a touch applied to the first partial image 310a, the control unit 180 may change the first partial image 310a such that an output size thereof is reduced.

Thereafter, the control unit 180 may synthesize the first partial image 310a having a reduced size and the fourth partial image 320b of the second image to generate a synthetic image 510.

In the above, the method for synthesizing the first image and the second image on the basis of a control command of the user has been described. In this manner, in an embodiment of the present disclosure, the user may directly determine a form of a synthetic image.

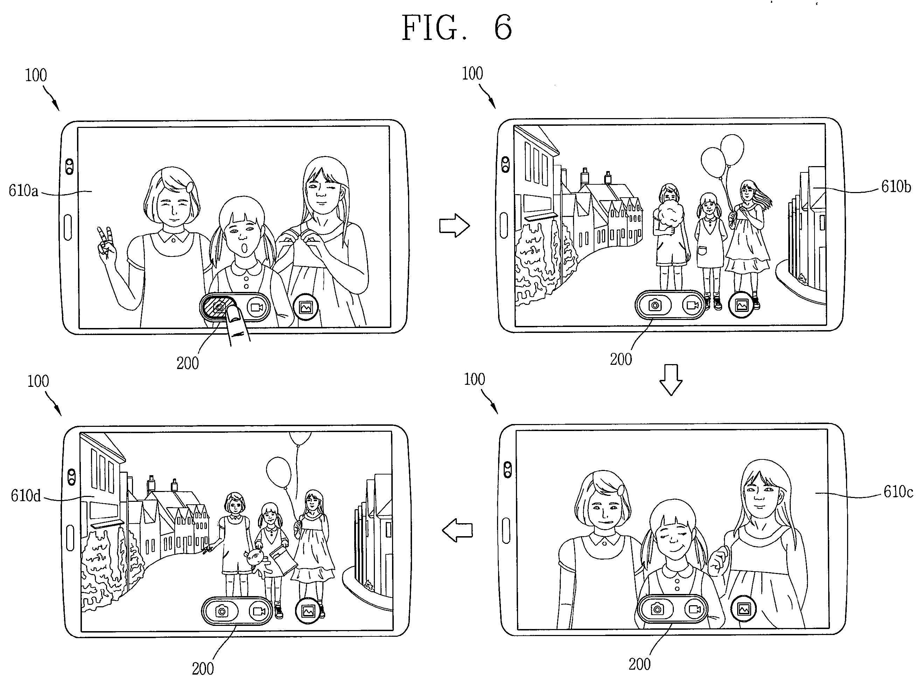

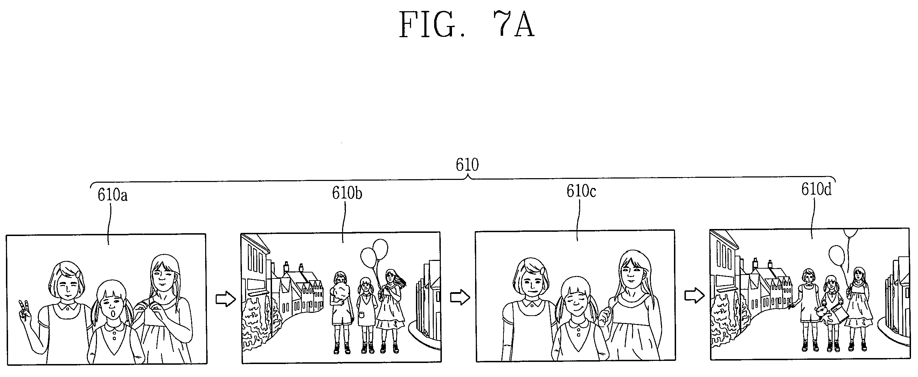

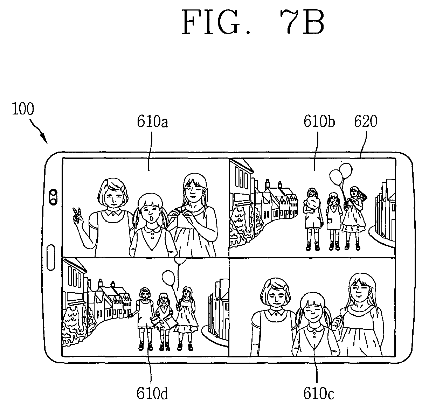

Hereinafter, a method for sequentially capturing images through the first camera and the second camera and synthesizing the captured images will be described. FIGS. 6, 7A, and 7B are conceptual views illustrating a method for sequentially capturing images through a first camera and a second camera and synthesizing the captured images.

The mobile terminal according to an embodiment of the present disclosure may sequentially capture images through the first camera 221a and the second camera 221b which are disposed on the front surface of the terminal body and capture different angles of view.

In detail, the control unit 180 may sequentially capture images through the first camera 221a and the second camera 221b according to preset order. The preset order may be set by the user or by the control unit 180.

For example, as illustrated in FIG. 6, the control unit 180 may capture a first image 610a, a second image 610b, a third image 610c, and a fourth image 610d according to order of the first camera 221a, the second camera 221b, the first camera 221a, and the second camera 221b.

In a case in which a plurality of images are captured according to the preset order, the control unit 180 may synthesize the plurality of images to generate a synthetic image. Here, the control unit 180 may generate the synthetic image on the basis of various synthesizing methods.

For example, as illustrated in FIG. 7A, the control unit 180 may generate a GIF image 610 by using the plurality of images 610a, 610b, 610c, and 610d.

In another example, as illustrated in FIG. 7B, the control unit 180 may generate a single synthetic image 620 including the plurality of images 610a, 610b, 610c, and 610d as partial images.

When the synthetic image is generated, the control unit 180 may store the generated synthetic image in the memory 170. Also, the control unit 180 may display the generated synthetic image on the display unit 151.

Also, although not shown, the plurality of images 610a, 610b, 610c, and 610d may be stored in the memory as separate images.

In the above, the method for sequentially capturing images through at least two cameras having different angles of view and synthesizing the captured images to obtain a synthesis image. In this manner, in an embedment of the present disclosure, a plurality of images having different angles of view and in the same image capture direction may be obtained. Also, the present disclosure may provide a plurality of images separately or synthesize the plurality of images to provide a synthetic image. Thus, the user may be provided with images captured through various cameras simultaneously. Also, the user may be provided with images having different angles of view without having to operate the cameras separately.

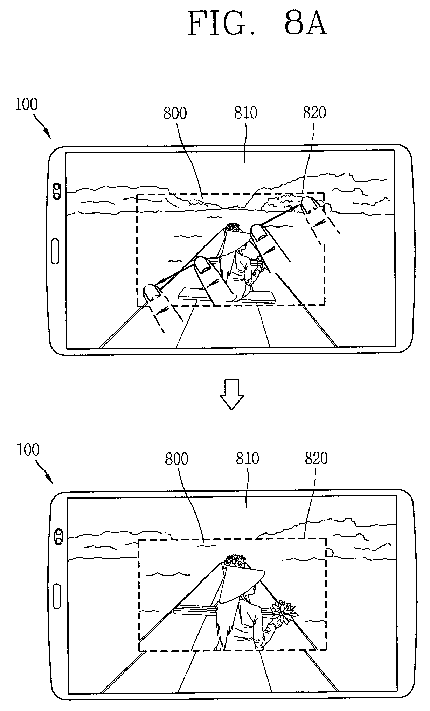

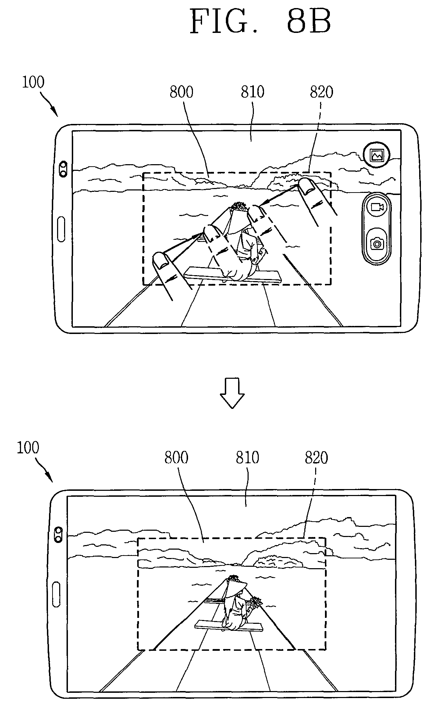

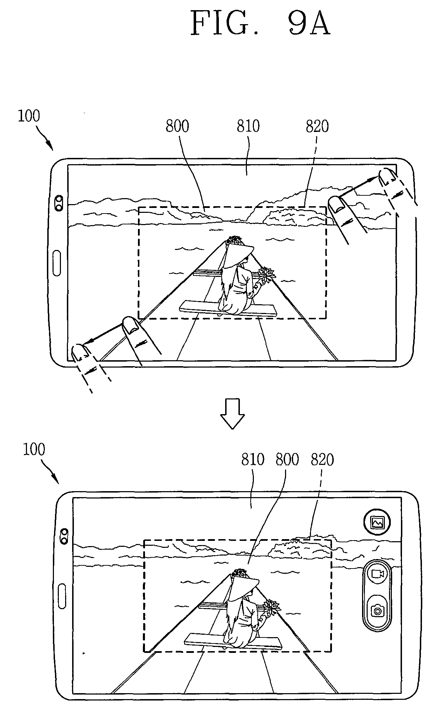

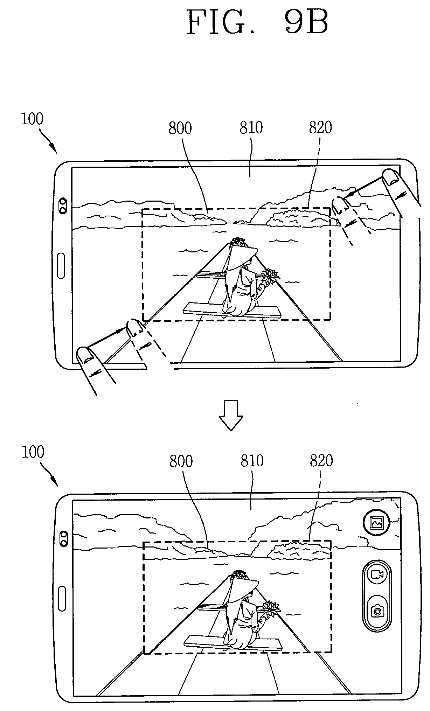

Hereinafter, a method for capturing images simultaneously through the first camera and the second camera having different angles of view and synthesizing the captured images to generate a synthetic image will be described. FIGS. 8A, 8B, 9A, and 9B are conceptual views illustrating a method for capturing images through a first camera and a second camera having different angles of view and synthesizing the images to generate a synthesized image.

The mobile terminal according to an embodiment of the present disclosure may capture a first image and a second image at different angles of view through the first camera 221a and the second camera 221b formed to capture images at different angles of view.

In order to capture the first image and the second image, the control unit 180 may display preview images of the images received from the first camera 221a and the second camera 221b together on the display unit 151.

Meanwhile, since the first camera 221a and the second camera 221b have different angles of view and receive images in the same image capture direction, images in which at least portions thereof are the same may be simultaneously received. In this case, the control unit 180 may display the first image received from the first camera 221a in a region overlapping a region in which the second image received from the second camera 221b having a greater angle of view, among the first camera 221a and the second camera 221b is displayed. That is, the control unit 180 may detect the same region as that of the first image from the second image received from the second camera 221b, and display the first image on the detected same region in an overlapping manner.

In this case, the control unit 180 may further display a graphic object for visually differentiating the first image and the second image on the preview images of the first image and the second image.

For example, as illustrated in the first drawing of FIG. 8A, the control unit 180 may display a first region 800 in which a preview image of the first image is displayed and a second region 810 in which a preview image of the second image is displayed on the display unit. Also, the control unit 180 may display the dotted line 820 for visually distinguishing between the first image and the second image on a boundary region between the first region 800 and the second region 810. Thus, the user may simultaneously view the image received from the first camera 221a and the image received from the second camera 221b. Also, the user may recognize the images received from the cameras by intuition through the graphic objects visually distinguishing between the images received from the first camera 221a and the second camera 221b.

Also, the control unit 180 may separately control the images received from the first camera 221a and the second camera 221b. In detail, on the basis of different touches applied to the first region 800 in which the preview image of the first image received from the first camera 221a is displayed, the control unit 180 may perform different controlling on the first image. In this case, the control unit 180 may not control the second image irrespective of controlling the first image.

Also, on the basis of different touches applied to the second region 810 in which the preview image of the second image received from the second camera 221b is displayed, the control unit 180 may perform different controlling on the second image. In this case, the control unit 180 may not control the first image irrespective of controlling the second image.

The different controlling may refer to performing different functions related to the images. The different functions related to the images may include a zoom-in or zoom-out function, a digital zoom-in or zoom-out function, and the like.

For example, as illustrated in FIG. 8A, when a pinch-out touch is applied to the first region 800 in which the preview image of the first image received from the first camera 221a is displayed, the control unit 180 may execute an optical zoom-in function on the first camera 221a. In this case, the preview image of the second image may not be magnified and the same preview image as that prior to the execution of the optical zoom-in function may be displayed in the second region 810.

Conversely, as illustrated in FIG. 8B, when a pinch-in touch is applied to the first region 800 in which the preview image of the first image received from the first camera 221a is displayed, the control unit 180 may execute an optical zoom-out function on the first camera 221a. In this case, the preview image of the first image reduced compared with that prior to execution of the optical zoom-out function may be displayed in the first region 800. Here, the preview image of the second image may not be reduced and the same preview image as that prior to the execution of the optical zoom-in function may be displayed in the second region 810.

In another example, as illustrated in FIG. 9A, when a pinch-out touch is applied to the second region 810 in which the preview image of the second image received from the second camera 221b is displayed, the control unit 180 may execute the optical zoom-in function on the second camera 221b. In this case, the preview image of the second image magnified compared with that prior to the execution of the optical zoom-in function may be displayed in the second region 810. Here, the preview image of the first image is not magnified and the same preview image as that prior to the execution of the optical zoom-in function may be displayed in the first region 800.

Conversely, as illustrated in FIG. 9B, when a pinch-in touch is applied to the second region 810 in which the preview image of the second image received from the second camera 221b is displayed, the control unit 180 may execute the optical zoom-out function on the second camera 221b. In this case, the preview image of the second image reduced compared with that prior to the execution of the optical zoom-out function may be displayed in the second region 810. Here, the preview image of the first image may not be reduced and the same preview image as that prior to the execution of the optical zoom-out function may be displayed in the first region 800.

In a state in which the preview image of the first image received from the first camera 221a is displayed on the region overlapping the region in which the preview image of the second image received from the second camera 221b having a greater angle of view among the first camera 221a and the second camera 221b on the display unit 151, when a request for capturing an image is received from the user, the control unit 180 may capture a synthetic image formed by synthesizing the preview image of the first image and the preview image of the second image.

For example, as illustrated in the first drawing of FIG. 8A, in a state in which the first image and the preview image of the second image displayed in an overlapping manner, when an image capture request is received, the control unit 180 may generate a synthetic image in a state in which the first image and the second image are displayed in the overlapping manner. That is, the control unit 180 may generate a synthetic image having the same form as that of the preview image displayed on the display unit 151.

Thus, as described above, in a case in which the preview image is zoomed in or zoomed out, the control unit 180 may generate a synthetic image in a zoomed-in or zoomed-out form. For example, as illustrated in the second drawing of FIG. 8A, in a case in which a preview image magnified from the first image is displayed on the preview image of the second image in an overlapping manner, the control unit 180 may generate a synthetic image in such a form that the magnified preview image of the first image and the preview image of the second image are displayed.

Also, the control unit 180 may edit the first image and the second image such that the first image and the second image have different visual effects. The visual effects may refer to a visual shape in which an image is displayed on the display unit. For example, the visual effect may be an effect of changing at least one of a color, a chroma, and brightness of an image. For example, the control unit 180 may set the first image to a black-and-white image and the second image as a colored image.

A visual effect of each image may be set by the user or may be determined by an angle of view of a camera. For example, in a case in which a camera has a first angle of view, the control unit 180 may control the camera having the first angle of view to capture a colored image, and in a case in which the camera has a second angle of view greater than the first angle of view, the control unit 180 may control the camera having the second angle of view to capture a black-and-white image.

Also, the control unit 180 may synthesize the first image and the second image having different visual effects to generate a synthetic image. For example, the control unit 180 may synthesize a first image set as a black-and-white image and a second image set as a colored image to generate a synthetic image. In this case, the synthetic image may include a partial image set to be black and white and a partial image set to be colored.

Thus, the user may view the synthetic image generated by synthesizing the first image and the second image having different visual effects. In the above, the method for simultaneously capturing images received through the cameras having different angles of view and synthesizing the captured images has been described.

In this manner, in an embodiment of the present disclosure, when images are captured, the user may directly select a form of a synthetic image. In the above, the method for capturing images respectively received from the first camera and the second camera and synthesizing the captured images simultaneously to generate a synthetic image has been described.

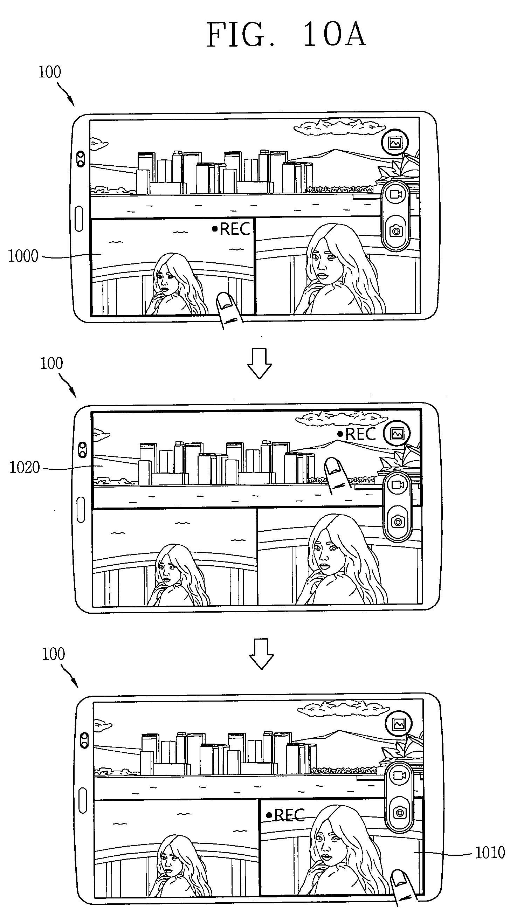

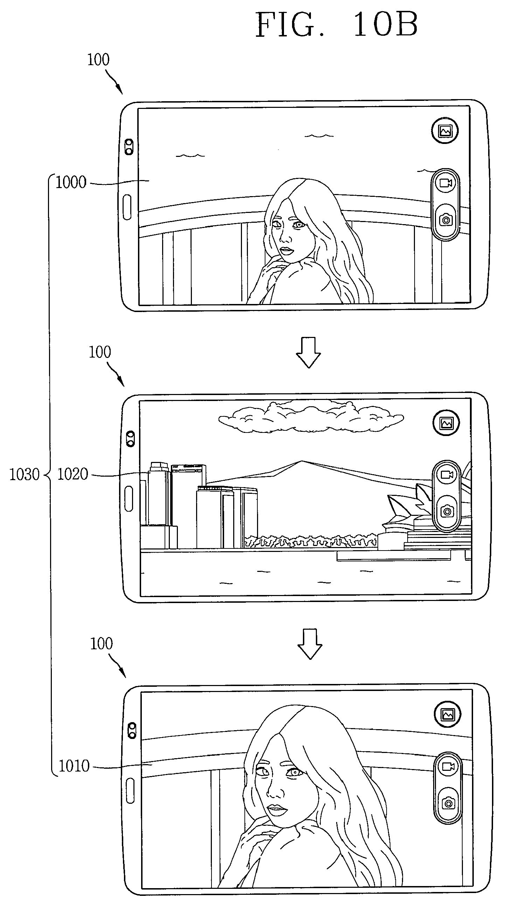

Hereinafter, a method for capturing images received through a plurality of cameras as video on the basis of a user touch will be described. FIGS. 10A and 10B are conceptual views illustrating a method for capturing video with images received through a plurality of cameras.

The mobile terminal according to an embodiment of the present disclosure may receive images through the first camera 221a and the second camera 221b which capture images at different angles of view in the same image capture direction. Also, the mobile terminal according to an embodiment of the present disclosure may further include a third camera (not shown) having a direction different from those of the first and second cameras 221a and 221b. For example, the third camera may be a camera having an image capture direction opposite to the image capture directions of the first and second cameras 221a and 221b.

The control unit 180 may display preview images of images received through the first camera 221a, the second camera 221b, and the third camera together on the display unit 151. For example, as illustrated in the first drawing of FIG. 10A, the control unit 180 may display the preview image of a first image received from the first camera 221a, the preview image of a second image received from the second camera 221b, and the preview image of a third image received from the third camera together on the display unit 151.

Also, in response to a touch applied to each of the preview images, the control unit 180 may capture an image received from any one of the first camera 221a, the second camera 221b, and the third camera, as video.

In detail, as illustrated in the first drawing of FIG. 10A, in response to a touch applied to a preview image 1000 of the second image received from the second camera 221b, the control unit 180 may capture the second image received from the second camera 221b, as video. In this case, the control unit 180 may further display a graphic object REC indicating that the second image is being captured as video.

Meanwhile, as illustrated in the second drawing of FIG. 10A, when a touch applied to a preview image 1020 of the third image received from the third camera is sensed while the second image received from the second camera 221b is being captured as video, the control unit 180 may capture the third image received through the third camera, as video. In this case, the control unit 180 may stop capturing the video of the second image received from the second camera 221b. Also, the control unit 180 may capture the third image received from the third camera, as video. That is, subsequent to the video which has been captured until the touch is applied to the preview image 1020 of the third image, the control unit 180 may capture the third image received from the third camera, as video. That is, in an embodiment of the present disclosure, images received from the respective cameras may not be captured as separate video but the image received through the different cameras may be generated as single video.

Similar to the afore-mentioned, when a touch applied to the preview image 1010 of the first image received from the first camera is sensed, the control unit 180 may capture the first image received through the first camera, as video. In this case, the control unit 180 may stop capturing video of the third image received through the third camera. Also, subsequent to the video which has been captured until the touch is applied to the preview image 1010 of the first image, the control unit 180 may capture the first image received from the first camera 221a, as video.

That is, as illustrated in FIG. 10B, the control unit 180 may generate videos sequentially captured in order of the second camera 221b, the third camera, and the first camera 221a, as single video 1030. Thus, the user may conveniently capture video having various angles of view and various image capture directions.

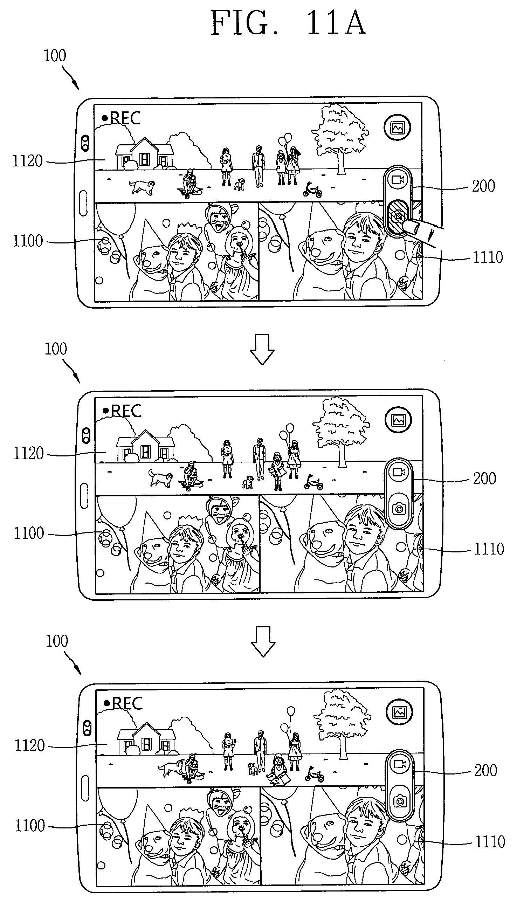

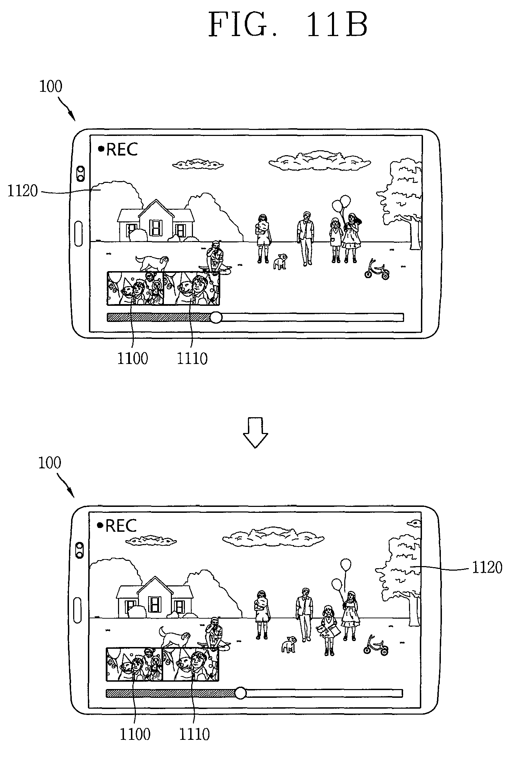

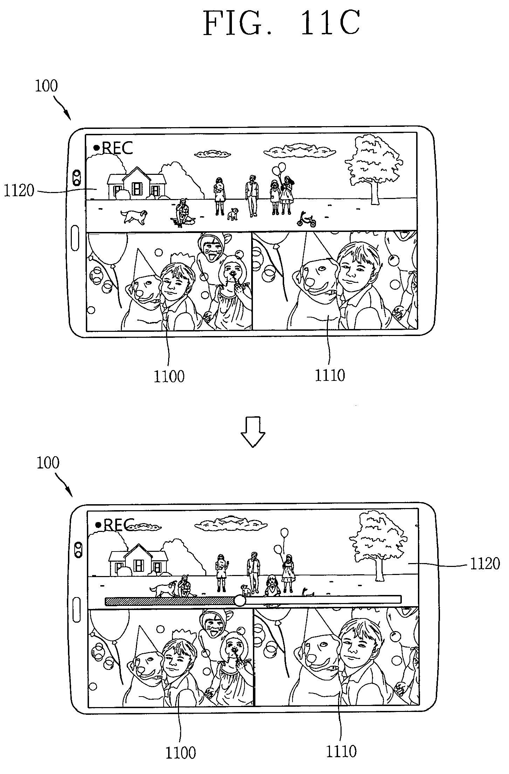

Hereinafter, a method for capturing video and a still image together through a plurality of cameras will be described. FIGS. 11A, 11B, and 11C are conceptual views illustrating a method for capturing video and a still image through a plurality of cameras.

The mobile terminal according to an embodiment of the present disclosure may receive images through the first camera 221a and the second camera 221b which capture images at different angles of view in the same image capture direction. Also, the mobile terminal according to an embodiment of the present disclosure may further include the third camera (not shown) having an image capture direction different from those of the first and second cameras 221a and 221b. For example, the third camera may be a camera having an image capture direction opposite to the image capture directions of the first and second cameras 221a and 221b.

The control unit 180 may capture images received through the first camera 221a, the second camera 221b, and the third camera, as one of still images or video. For example, the control unit 180 may capture the first image and the second image received from the first camera 221a and the second camera 221b as still images, and the third image received from the third camera as video.

Here, in response to a touch applied to a graphic object associated with an image capture request function, the control unit 180 may capture the images received from the first camera 221a, the second camera 221b, and the third camera simultaneously. For example, as illustrated in the first drawing of FIG. 11A, in response to a touch applied to a graphic object 200 associated with the image capture request function, the control unit 180 may capture a first image 1110 and a second image 1100 respectively received from the first camera 221a and the second camera 221b as still images, and capture a third image 1120 received from the third camera as video.

While the video is being captured, when a touch is applied to the graphic object 200 associated with the image capture request function, the control unit 180 may stop capturing the video and may generate the captured image as video.

Also, the control unit 180 may process the captured images in an associated manner. In detail, the control unit 180 may synthesize the first image 1110, the second image 1100, and the third image 1120 to generate a synthetic image.

The synthetic image may be an image in which the still images are displayed together while video is being reproduced (or played). For example, as illustrated in FIG. 11B, while the third image is being reproduced, the control unit 180 may display thumbnail images of the first image 1110 and the second image 1100 on the third image in an overlapping manner. Alternatively, as illustrated in FIG. 11C, the control unit 180 may divide the display unit 151 into a display region of the third image 120, a display region of the first image 1110, and a display region of the second image 1100, and display the first image 1110, the second image 1100, and the third image 1120 in the respective regions.

In this manner, in an embodiment of the present disclosure, image capturing may be performed at various moments simultaneously, at various angles and in various image capture directions.

In an embodiment of the present disclosure, various images may be captured through at least two cameras having different angles of view.

Also, in an embodiment of the present disclosure, image capturing may be performed with at least two cameras having different angels of view, and a synthetic image may be generated by using images captured by respective cameras. Thus, in an embodiment of the present disclosure, images at moments may be captured at various angles of view and in various image capture directions and stored.

The present invention described above may be implemented as a computer-readable code in a medium in which a program is recorded. The computer-readable medium includes any type of recording device in which data that can be read by a computer system is stored. The computer-readable medium may be, for example, a hard disk drive (HDD), a solid state disk (SSD), a silicon disk drive (SDD), a ROM, a RAM, a CD-ROM, a magnetic tape, a floppy disk, an optical data storage device, and the like.

The computer-readable medium also includes implementations in the form of carrier waves (e.g., transmission via the Internet). Also, the computer may include the control unit 180 of the terminal. Thus, the foregoing detailed description should not be interpreted limitedly in every aspect and should be considered to be illustrative.

The scope of the present invention should be determined by reasonable interpretations of the attached claims and every modification within the equivalent range are included in the scope of the present invention.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a first camera (221a) configured to capture an image at a first angle of view;
a second camera (221b) configured to capture an image at a second angle of view that is different from the first angle of view; and
a controller (180) configured to:
capture a first image received from the first camera (221a) and a second image received from the second camera (221b); and
process the first image and the second image by associating the first image with the second image.

2. The mobile terminal of claim 1, wherein the controller (180) is further configured to:
detect a partial image corresponding to the first image in the second image; and
replace the detected partial image with at least a portion of the first image to generate a synthetic image including the at least portion of the first image and a portion of the second image.

3. The mobile terminal of claim 1 to 2, wherein the first camera (221a) and the second camera (221b) are directed to a same image capture direction, and the controller (180) is further configured to capture the first image and the second image simultaneously in the same image capture direction.

4. The mobile terminal of claim 3, wherein the controller (180) is further configured to generate at least one of the simultaneously captured images as a moving image or video.

5. The mobile terminal of claim 1 to 3, wherein the controller (180) is further configured to capture the first image received via the first camera (221a) and the second image received via the second camera (221b) sequentially in a set order.

6. The mobile terminal of claim 1 to 3, further comprising:
a display,
wherein the controller (180) is further configured to cause the display to display a first preview image of the first image and a second preview image of the second image in an overlapping manner such that the first preview image is displayed within a region of the second preview image.

7. The mobile terminal of claim 6, wherein the controller (180) is further configured to cause the display to display a boundary of the region of the second preview image within which the first preview image is displayed.

8. The mobile terminal of claim 6 to 7, wherein the controller (180) is further configured to control the first camera (221a) or the second camera (221b) such that the first preview image or the second preview image is zoomed in or zoomed out when a touch is applied to the display on which the first preview image and the second preview image are displayed.

9. The mobile terminal of claim 6 to 8, wherein the controller (180) is further configured to control the first camera (221a) or the second camera (221b), causing the first image and the second image to have different visual effects.

10. The mobile terminal of claim 6 to 9, wherein the controller (180) is further configured to capture the first image and the second image simultaneously, synthesize the first image and the second image such that the first image overlaps the second image, and generate a synthetic image including the overlapping images in response to a user input for capturing an image.

11. The mobile terminal of claim 1 to 3, further comprising:
a display,
wherein the controller (180) is further configured to:
cause the display to divide a display region into a first region displaying a first preview image of the first image and a second region displaying a second preview image of the second image; and
capture the first image as video when a touch is applied to the first region while the first preview image is displayed on the first region and the second preview image is displayed on the second region.

12. The mobile terminal of claim 11, wherein the controller (180) is further configured to capture the second image as video when a touch is applied to the second region while the first image is being captured as the video.

13. The mobile terminal of claim 12, wherein the controller (180) is further configured to stop the capturing of the first image as the video when the touch is applied to the second region while the first image is being captures as the video.

14. The mobile terminal of claim 12, wherein the controller (180) is further configured to synthesize the first image captured as the video and the second image captured as the video to generate a synthetic image.

15. A method for controlling a mobile terminal having first and second cameras (221a, 221b), the method comprising:
capturing a first image received from the first camera (221a) configured to capture an image at a first angle of view;
capturing a second image received from the second camera (221b) configured to capture an image at a second angle of view that is different from the first angle of view; and
processing the first image and the second image by associating the first image with the second image.
